# EUROPEAN PATENT APPLICATION

(11) **EP 4 123 520 A1**
(43) Date of publication of application: **25.01.2023**
(21) Application number: 21771006.0
(22) Date of filing: 18.03.2021
(51) Int. Cl.: G06Q 10/00, G05B 19/418, G06Q 50/04

(54) **DATA CIRCULATION CONTROL DEVICE, METHOD, AND PROGRAM**

(30) Priority: 19.03.2020 JP 2020049221
(71) Applicant: NTT Communications Corporation, Tokyo 100-8019 (JP)
(72) Inventor: TAKADA, Tomonori, Tokyo 100-8019 (JP); AKABORI, Hideaki, Tokyo 100-8019 (JP); KISHIDA, Tsunechika, Tokyo 100-8019 (JP); KOBAYASHI, Yoshihiko, Tokyo 100-8019 (JP); SUZUKI, Masataka, Tokyo 100-8019 (JP); MINAKUCHI, Tohru, Tokyo 100-8019 (JP)
(74) Representative: Nederlandsch Octrooibureau
(86) International application number: PCT/JP2021/011121
(87) International publication number: WO 2021/187563

(57) **Abstract**

The confidentiality of data is maintained in the case of outsourcing analysis of an operation state of a facility. Degree-of-relevance information indicating a degree of relevance in operation between a plurality of apparatuses included in a facility is stored. At the occurrence of a failure in a first apparatus included in the plurality of apparatuses, a second apparatus having a degree of relevance in operation to the first apparatus equal to or greater than a preset first threshold is selected from the plurality of apparatuses based on the degree-of-relevance information, and the log data relating to operation states of the first apparatus in which a failure has occurred and the selected second apparatus are selectively read from a first memory storage, and the read log data is transmitted to a data user via a network.

## Description

### FIELD

Embodiments of the present invention relate to a data distribution control apparatus, a data distribution control method, and a data distribution control program for controlling data distribution from a data owner to a data user.

### BACKGROUND

For example, in a manufacturing field, there is known a system that diagnoses an operation state of a facility of a manufacturer, etc., by using a network. For example, Patent Literature 1 describes a system that diagnoses a breakdown in a machine by transmitting data indicating an operation state of the machine to a diagnosis center via a network and accumulating in the diagnosis center the received data indicating the operation state. At the occurrence of a breakdown in a machine, this type of system enables a diagnosis center to immediately detect the situation and generate an alarm, etc.

### CITATION LIST

### PATENT LITERATURE

Jpn. Pat. Appln. KOKAI Publication No. 2019-185292

### SUMMARY

### TECHNICAL PROBLEM

Recently, there has been a growing number of cases in which such a diagnosis of a facility as described above is outsourced to an external support center without being performed by a diagnosis center operated and managed by a manufacturer. Even in the case where a manufacturer operates and manages a support center, diagnosis of some functions of a facility may be outsourced from the support center to, for example, a component manufacturer or a software vendor.

However, in the case where the existing technique is applied as it is, data indicating an operation state of a facility is unconditionally transmitted to an outside source. This causes a risk that even confidential data relating to the manufacturing of a product, which is not necessary for the detection or diagnosis of a failure, may be leaked to the outside source, and the confidentiality of the data may be lost.

The present invention has been made in view of the above circumstances, and an object of the present invention is to provide a technique that can maintain confidentiality of data in the case of outsourcing an analysis of an operation state of a facility.

### SOLUTION TO PROBLEM

In order to achieve the object described above, one aspect of a data distribution control apparatus and a data distribution control method according to the present invention stores relevance information indicating a degree of relevance in operation between a plurality of apparatuses included in a facility when log data indicating an operation state of a facility including the apparatuses is transmitted to a data user via a network. Then, log data indicating operation states of the plurality of apparatuses are separately acquired and chronologically stored, and at the occurrence of a failure in a first apparatus included in the apparatuses, a second apparatus in which a degree of relevance in operation to the first apparatus is equal to or greater than a preset first threshold is selected from the plurality of apparatuses based on the degree-of-relevance information, and log data indicating an operation state of the selected second apparatus is transmitted as a distribution object to the data user via the network.

### ADVANTAGEOUS EFFECTS OF INVENTION

According to one aspect of the present invention, for example, at the occurrence of a failure in a first apparatus within a facility, a second apparatus having an operational relevance to the first apparatus is selected, and log data relating to an operation state of the selected second apparatus is transmitted to a data user. Accordingly, log data corresponding to an apparatus having a low operational relevance to the failure is not transmitted, so that the confidentiality of log data can be maintained at a high level as compared to a case in which log data corresponding to all apparatuses are unconditionally transmitted.

That is, according to one aspect of the present invention, it is possible to provide a technique that can maintain confidentiality of data in the case of outsourcing analysis of an operation state of a facility.

### BRIEF DESCRIPTION OF THE DRAWINGS

FIG. 1 is a diagram showing an overall configuration of a failure analysis support system including a production management apparatus functioning as a data distribution control apparatus according to an embodiment of the present invention.
FIG. 2 is a block diagram showing a hardware configuration of the production management apparatus shown in FIG. 1.
FIG. 3 is a block diagram showing a software configuration of the production management apparatus shown in FIG. 1.
FIG. 4 is a diagram showing an example of a target apparatus/peripheral apparatus degree-of-relevance database provided in the production management apparatus shown in FIG. 3.
FIG. 5 is a flowchart showing a processing procedure and processing contents of data distribution control by the production management apparatus shown in FIG. 3.
FIG. 6 is a flowchart showing a first half of log data transmission source selection processing and data transmission control processing in the processing procedure shown in FIG. 5.
FIG. 7 is a flowchart showing a second half of the log data transmission source selection processing and the data transmission control processing in the processing procedure shown in FIG. 5.

### DETAILED DESCRIPTION

Hereinafter, embodiments according to the present invention will be described with reference to the drawings.

### (Embodiment)

### (Configuration Example)

### (1) System

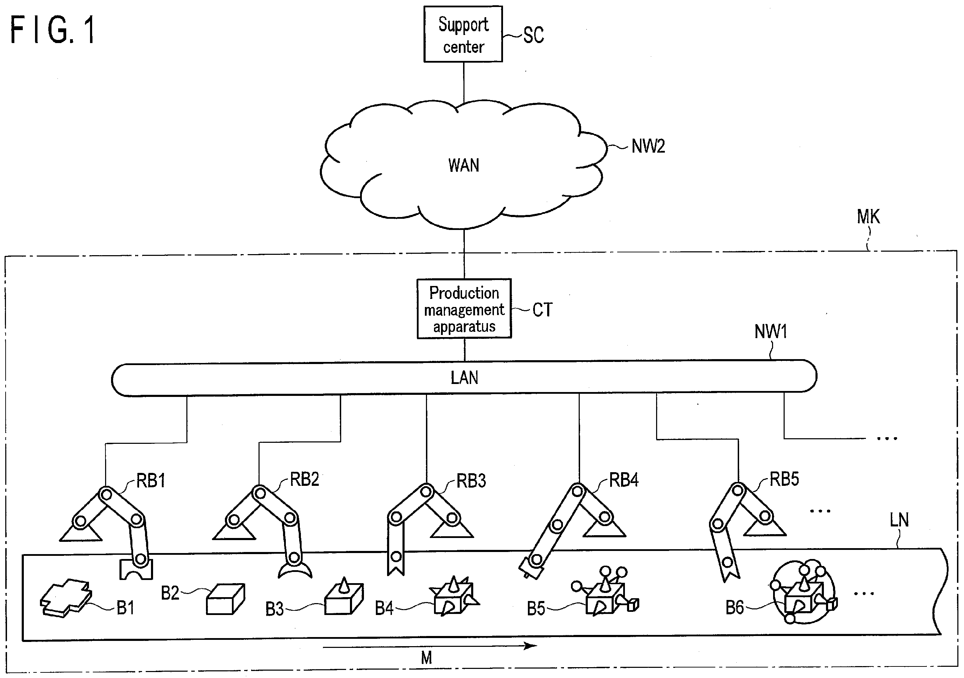

FIG. 1 is a diagram showing an overall configuration of a system including a data distribution control apparatus according to an embodiment of the present invention.

In FIG. 1, MK denotes a production facility of a set manufacturer, for example. The production facility MK includes, for example, a production line LN in which a plurality of manufacturing apparatuses RB1, RB2, ..., are arranged in a moving direction M of the production line LN. For example, the manufacturing apparatuses RB1, RB2, ..., share and conduct work of bending and joining a plate-shaped component B1 carried in from another line or a component supplying apparatus (not illustrated), thereby forming a base B2 of a set, and sequentially attaching a plurality of components to the base B2 in stages, thereby assembling sets B3 to B6.

Each of the manufacturing apparatuses RB1, RB2, ..., includes, for example, an assembly robot, and executes a pre-designated assembling operation under the control of a manufacturing controller such as a programmable logic controller (PLC) (not illustrated). In order to control and monitor the assembling operation, the manufacturing apparatuses RB1, RB2, ..., are provided with a plurality of sensors (illustration omitted). Each of these sensors outputs sensor data indicating an operation state of a predetermined portion of each of the manufacturing apparatuses RB1, RB2, .... Sensor data output from each of the sensors is transferred to a production management apparatus CT via a local area network (LAN) NW1 established within the production facility MK.

The configuration of the production line LN, the type and number of the manufacturing apparatuses RB1, RB2, ..., the operation contents of the manufacturing apparatuses RB1, RB2, ..., the configuration of a product to be manufactured, the type and contents of operation states to be detected by the sensors, etc., may be freely selected, and the LAN is not limited to a wired LAN but may be a wireless LAN.

The production management apparatus CT is capable of communicating data with an external support center SC via a wide area network (WAN) NW2. In the event of a failure in the manufacturing apparatuses RB1, RB2, ..., the production management apparatus CT transmits sensor data corresponding to a manufacturing apparatus in which the failure has occurred and sensor data relating to manufacturing apparatuses arranged in the vicinity of the aforementioned manufacturing apparatus to the external support center SC via the WAN. The external support center SC executes analysis processing for estimating a cause or sign of the failure based on log data transmitted from the production management apparatus CT, and returns information indicating a result of the analysis to the production management apparatus CT serving as a request source via the WAN.

### (2) Production Management Apparatus CT

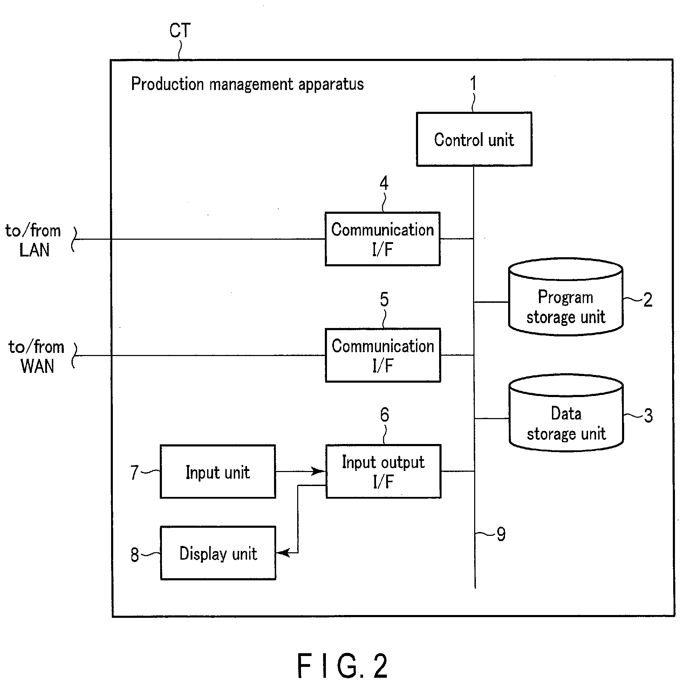

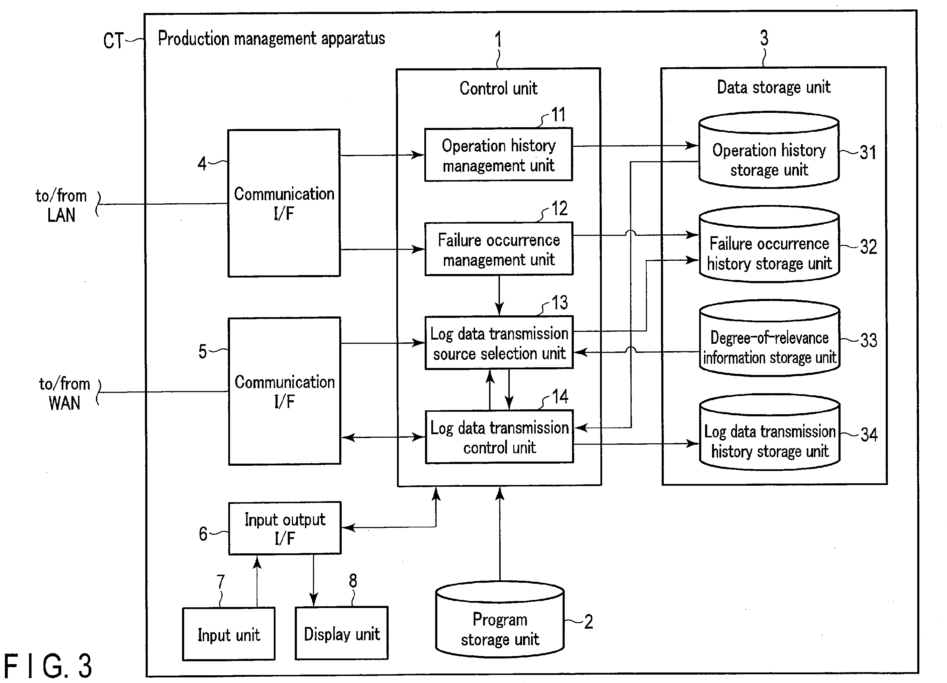

FIGS. 2 and 3 are block diagrams respectively showing a hardware configuration and a software configuration of the production management apparatus CT.

The production management apparatus CT has a function as a data distribution control apparatus according to an embodiment of the present invention, and includes, for example, a server computer or a personal computer. The production management apparatus CT may be installed in the production facility MK of the set manufacturer, or may be installed in the cloud or on the Web.

The production management apparatus CT includes a control unit 1 having a hardware processor such as a central processing unit (CPU), etc., and a program storage unit 2, a data storage unit 3, communication interfaces (communication I/F) 4 and 5, and an input/output interface (input/output I/F) 6 are connected to the control unit 1 via a bus 9.

The communication I/F 4 performs data communications with a LAN under a communication protocol defined in the LAN, and under the control of the control unit 1, mainly receives sensor data and alarm data transmitted from the manufacturing apparatuses RB1, RB2, .... The communication I/F5 performs data communications with a WAN under a communication protocol defined in the WAN, and under the control of the control unit 1, performs transmission of log data and reception of information indicating a failure analysis result to and from the external support center SC.

An input unit 7 and a display unit 8 are connected to the input/output I/F 6. The input unit 7 and the display unit 8 are used, for example, by a production manager to input various types of setting information to the production management apparatus CT and to display, at the occurrence of a failure, alarm information of this occurrence and an analysis result of the failure.

The program memory 2 uses, for example, as a main storage medium, a nonvolatile memory such as a hard disk drive (HDD) or a solid state drive (SSD), which allows writing and reading at any time, and a storage area of the program storage unit 2 stores, in addition to middlewear such as an operating system (OS), programs for executing various types of processing according to an embodiment of the present invention. The storage medium may include the aforementioned HDD or SSD in combination with a read only memory (ROM).

The data storage unit 3 is, for example, a combination of an HDD or an SSD and a random access memory (RAM), and a storage area of the data storage unit 3 is provided with an operation history storage unit 31, a failure occurrence history storage unit 32, a degree-of-relevance information storage unit 33, and a log data transmission history storage unit 34, which are used in an embodiment of the present invention.

For each of the manufacturing apparatuses RB1, RB2, ..., the operation history storage unit 31 is used to chronologically store sensor data respectively output from their sensors together with an ID of a manufacturing apparatus serving as a generation source and an ID of a corresponding sensor.

For each of the manufacturing apparatuses RB1, RB2, ..., the failure occurrence history storage unit 32 stores alarm data respectively generated from their sensors together with an occurrence time, an ID of a manufacturing apparatus serving as a generation source and an ID of a corresponding sensor. The failure occurrence history storage unit 32 also stores information indicating a failure analysis result that has been returned from the external support center SC.

The degree-of-relevance information storage unit 33 stores information (degree-of-relevance information) indicating the degree of relevance in operation between the manufacturing apparatuses RB1, RB2, ... An example of the degree-of-relevance information will be described later.

The log data transmission history storage unit 34 is used to store information indicating a transmission history of log data transmitted to the external support center SC.

The control unit 1 includes, as processing functions according to an embodiment of the present invention, an operation history management unit 11, a failure occurrence management unit 12, a log data transmission source selection unit 13, and a log data transmission control unit 14. Each of the processing units 11 to 14 is realized by causing a hardware processor of the control unit 1 to execute a program stored in the program storage unit 2.

The operation history management unit 11 receives, via the communication I/F 4, sensor data each of which indicates an operation state of an apparatus and which are chronologically output from the plurality of sensors for each of the manufacturing apparatuses RB1, RB2, .... Subsequently, each of the received sensor data is associated with an occurrence time or a reception time of a corresponding received sensor data and with an ID of a manufacturing apparatus serving as a data generation source and an ID of a corresponding sensor, and is then stored, as log data indicating an operation state of each of the manufacturing apparatuses RB1, RB2, ..., in the operation history storage unit 31.

The failure occurrence management unit 12 performs the processing of: receiving, for each of the manufacturing apparatuses RB1, RB2, ..., via the communication I/F 4, alarm data respectively output from sensors of the manufacturing apparatuses RB1, RB2, ...; determining, based on the received alarm data, a manufacturing apparatus serving as a failure occurrence source; and storing, in the failure occurrence history storage unit 32, an ID of the manufacturing apparatus determined to be the failure occurrence source, together with an alarm occurrence time and an ID of a sensor serving as an alarm generation source. Failures include an operation state indicating a sign of a failure. Furthermore, the type of failure may be estimated from the type of alarm.

At the occurrence of a failure (including its sign) in the manufacturing apparatuses RB1, RB2, ..., the log data transmission source selection unit 13 specifies a peripheral manufacturing apparatus having an operational relevance to a manufacturing apparatus in which the failure has occurred, based on the degree-of-relevance information stored in the degree-of-relevance information storage unit 33. The log data transmission source selection unit 13 then performs processing of sequentially selecting the specified peripheral manufacturing apparatuses according to the degree of relevance included in the degree-of-relevance information.

The log data transmission source selection unit 13 further performs processing of: receiving, via the communication I/F 5, information indicating a failure analysis result that has been returned from the external support center SC after transmission of the log data; and storing the received information in the failure occurrence history storage unit 32.

The log data transmission control unit 14 reads, from the operation history storage unit 31, sensor data generated from the manufacturing apparatus in which the failure has occurred and sensor data generated from the peripheral manufacturing apparatus selected by the log data transmission source selection unit 13. The log data transmission control unit 14 then performs processing of transmitting the read log data from the communication I/F 5 to the external support center SC. At this time, log data serving as a transmission object may be limited to those generated during a predetermined time range before a failure occurrence timing used as the reference.

After log data transmission, the log data transmission control unit 14 performs processing of transmitting a log data erasure request from the communication I / F5 to the external support center SC serving as a log data transmission destination. A transmission timing of the aforementioned erasure request is set to a time point when a predetermined time has elapsed from an end time point of the log data transmission. The predetermined time is set to be longer than a time required to acquire information indicating an analysis result from the external support center SC after the transmission of the above log data is completed.

### (Operation Example)

Next, an operation example of the production management apparatus CT configured as described above will be described.

### (1) Setting of Degree-of-Relevance Information

Before the system starts to operate, information indicating the degree of relevance in operation between the manufacturing apparatuses RB1, RB2, ..., is set. This degree-of-relevance information is set by, for example, a production manager inputting necessary data to the input unit 7. Under the control of the control unit 1, the production management apparatus CT captures, via the input/output I/F 6, the aforementioned data input to the input unit 7 and stores the data in the degree-of-relevance information storage unit 33, thereby generating degree-of-relevance information.

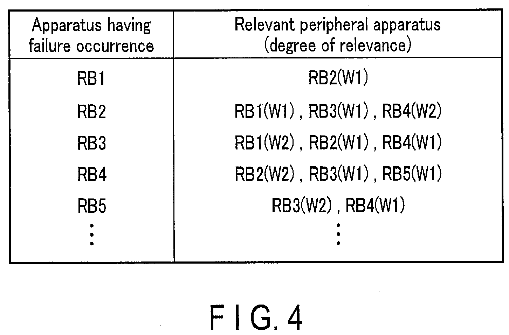

FIG. 4 shows an example of the degree-of-relevance information. The degree-of-relevance information is acquired by associating, for each of the manufacturing apparatuses RB1, RB2, ..., IDs of peripheral manufacturing apparatuses that may affect an operation of one manufacturing apparatus (target apparatus) with IDs of peripheral manufacturing apparatuses that may be affected by the operation of the target apparatus, and further assigning, to the respective peripheral apparatuses, degrees of relevance W1 and W2 in operation with the target apparatus.

### (2) Data Distribution Control

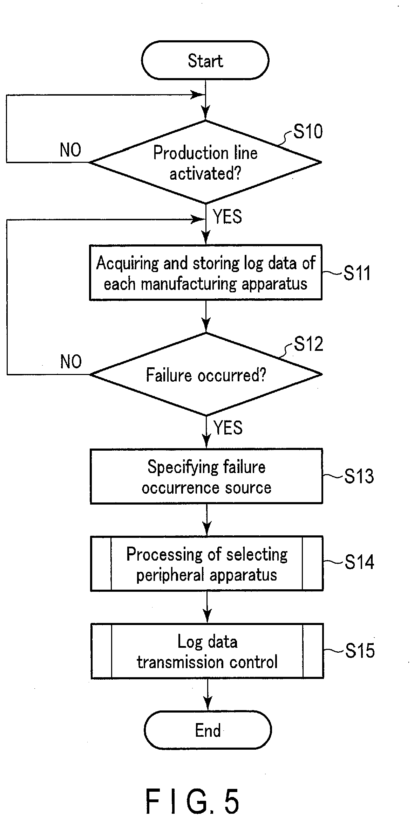

FIG. 5 is a flowchart showing an example of the overall processing procedure and processing contents of data distribution control operation by the production management apparatus CT.

### (2-1) Management of Operation History

The control unit 1 of the production management apparatus CT monitors the activation of the production line LN in step S10 shown in FIG. 5. When the production line LN is activated in this state, each of the manufacturing apparatuses RB1 to RBn starts to operate. Then, the operation states of the manufacturing apparatuses RB1, RB2, ..., are respectively detected by the sensors, and sensor data is output.

Under the control of the operation history management unit 11, in step S11, the control unit 1 of the production management apparatus CT receives the sensor data respectively output from the manufacturing apparatuses RB1, RB2, ..., via the communication I/F 4, associates each of the received sensor data with an ID of a manufacturing apparatus serving as a transmission source and an ID of a corresponding sensor, and then stores the sensor data, as log data, in the operation history storage unit 31. Sensor data is chronological data, and is assigned information indicating a detection timing or a reception timing. Sensor data may be acquired through real-time processing or through batch processing in which sensor data is collectively acquired for a fixed amount of time.

### (2-2) Management of Failure Occurrence History

While the production line LN is in operation, under the control of the failure occurrence management unit 12, the control unit 1 of the production management apparatus CT monitors, in step S12, the generation of alarm data from the manufacturing apparatuses RB1, RB2, ....

In this state, for example, when a failure (including signs of failure) is detected in the manufacturing apparatus RB3 and alarm data is output accordingly, the failure occurrence management unit 12 receives the alarm data via the communication I/F 4. Then, in step S13, the failure occurrence management unit 12 identifies a source of the failure based on the received alarm data. Subsequently, the failure occurrence management unit 12 notifies the log data transmission source selection unit 13 of the ID of the identified manufacturing apparatus serving as the failure occurrence source, together with a failure occurrence notification. At the same time, the ID of the manufacturing apparatus serving as the failure occurrence source is stored in the failure occurrence history storage unit 32 together with information indicating a failure occurrence location and information indicating a failure occurrence timing.

### (2-3) Selection of Peripheral Apparatus whose Log Data is to be Transmitted and Transmission of Log Data

Upon receipt of the failure occurrence notification, the control unit 1 of the production management apparatus CT first proceeds to step S14, and executes, under the control of the log data transmission source selection unit 13, processing of selecting a peripheral apparatus whose log data is to be transmitted as will be described below.

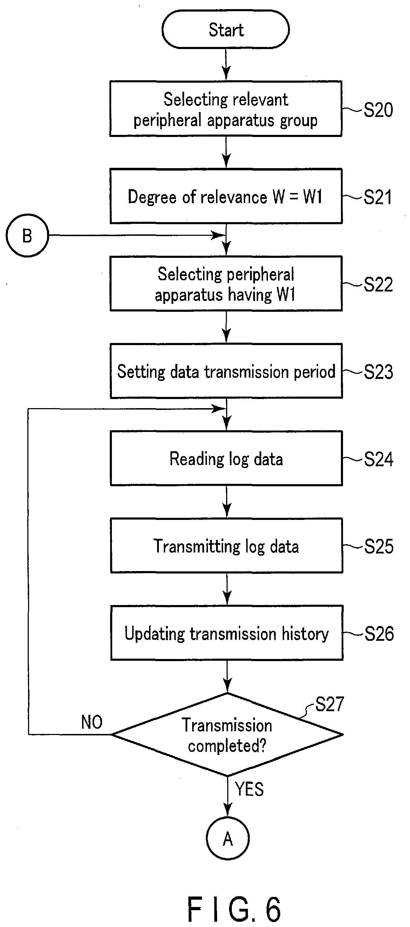

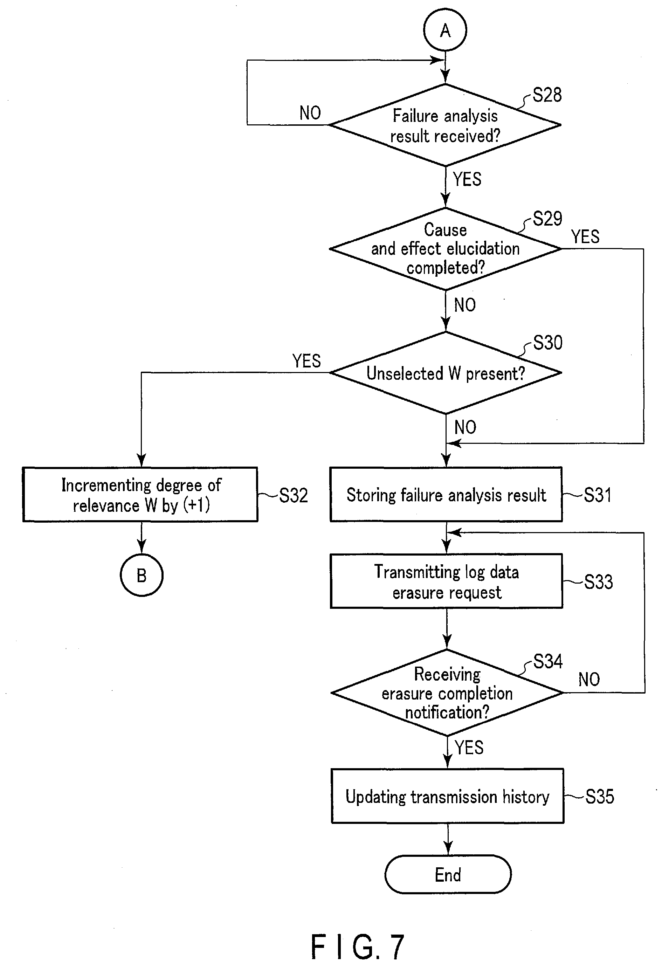

FIGS. 6 and 7 are flowcharts each showing steps of controlling selection of a log data transmission source by the log data transmission source selection unit 13, together with steps of controlling log data transmission to be described later.

The log data transmission source selection unit 13 refers to the degree-of-relevance information stored in the degree-of-relevance information storage unit 33, and first, in step S20, selects a peripheral manufacturing apparatus having an operational relevance to the manufacturing apparatus (target apparatus) RB3 serving as the failure occurrence source. As a result, in the example of FIG. 4, the peripheral apparatuses RB1, RB2, and RB4 are selected. Subsequently, in step S21, the log data transmission source selection unit 13 sets, as the degree of relevance W, W1 indicating the greatest value (corresponding to a degree of relevance equal to or greater than a first reference value). In step S22, by referring to the degrees of relevance respectively assigned to the peripheral apparatuses RB1, RB2, and RB4 selected in step S20, the log data transmission source selection unit 13 selects a peripheral apparatus assigned the degree of relevance W1. As a result, in the example of FIG. 4, the peripheral apparatuses RB2 and RB4 are selected. The log data transmission source selection unit 13 sends a notification of the IDs of the selected peripheral apparatuses RB2 and RB4 to the log data transmission control unit 14.

Upon completion of the processing of selecting a peripheral apparatus as a log data transmission source, the control unit 1 of the production management apparatus CT proceeds to step S15, thereby executing the processing of transmitting log data under the control of the log data transmission control unit 14, as will be described below.

That is, first, in step S23, while a failure occurrence timing in the target apparatus RB3 is used as the reference, the log data transmission control unit 14 sets, as a log data transmission object period, a preset time range before the failure occurrence timing. At the same time, the log data transmission control unit 14 sets, as a log data transmission object period for the selected peripheral apparatuses RB2 and RB4, a period corresponding to the log data transmission object period set for the target apparatus RB3.

When a log data transmission object period is set for the peripheral apparatuses RB2 and RB4, it is desirable to set this period in consideration of an operation time difference from the target apparatus RB3. This operation time difference is expressed as, for example, a total time of a conveyance time of a product in accordance with a distance on the production line between the target apparatus RB3 and the peripheral apparatuses RB2 and RB4, and a work time of one cycle with respect to the product. Various parameters necessary for setting the log data transmission object period are stored in advance in the data storage unit 3.

Next, in step S24, the log data transmission control unit 14 selectively reads, from the operation history storage unit 31, log data which corresponds to the log data transmission object period set in step S23, among the log data indicating an operation state of the manufacturing apparatus RB3 in which the failure is detected. Similarly, for the peripheral apparatuses RB2 and RB4 also, the log data transmission control unit 14 selectively reads log data which correspond to the set log data transmission object period, from the operation history storage unit 31. Then, in step S25, the log data transmission control unit 14 transmits each of the read log data from the communication I/F 5 to the external support center SC.

The log data may be sequentially transmitted for each of the apparatuses RB3, RB2, and RB4, or may be collectively transmitted. This transmission of log data is similar to that in the existing system in that authentication is performed with a transmission destination, and the log data is encrypted according to a predetermined rule.

After transmission of the log data, in step S26, the log data transmission control unit 14 issues an event number in the order of occurrence of a failure, for example, and stores the event number in the log data transmission history storage unit 34 in such a manner that the event number is associated with an ID of a manufacturing apparatus that has served as a failure occurrence source, IDs of peripheral apparatuses that have concurrently transmitted log data, a time range of the transmitted log data, and a transmission destination and transmission time of the log data.

Finally, in step S27, the log data transmission control unit 14 determines whether or not the transmission of the respective log data has been completed. As a result of this determination, in the case where any of the log data remains untransmitted, the processing returns to step S24, and a series of steps from S24 to S26 of log data transmission processing is repeated. On the other hand, upon completion of the transmission of the log data, the log data transmission source selection unit 13 is notified of this fact.

After receiving the notification of the completion of transmission, first, in step S28, the log data transmission source selection unit 13 monitors reception of information indicating a failure analysis result from the external support center SC serving as a transmission destination, as shown in FIG. 7. Upon receipt of information indicating the failure analysis result, in step S29, a determination as to whether or not a cause of failure occurrence has been elucidated is made based on the received information indicating the failure analysis result. As a result of this determination, if the cause is elucidated, in step S31, information indicating the failure analysis result is associated with an ID of a manufacturing apparatus serving as a corresponding failure occurrence source and is then stored in the failure occurrence history storage unit 32.

Therefore, by viewing the information stored in the failure occurrence history storage unit 32 via the input/output I/F 6, a production manager can confirm an occurrence cause of a failure in the target apparatus RB3 even in in the case where the cause is in the peripheral apparatus RB2 on the upstream side. Similarly, even in the case where a failure that has occurred in the target apparatus RB3 affects the peripheral apparatus RB4 on the downstream side, the production manager can confirm or estimate such a situation.

On the other hand, it is assumed that a cause of a failure is not elucidated from the failure analysis result received from the external support center SC. In this case, in step S30, the log data transmission source selection unit 13 determines whether or not log data transmission has been completed for all the peripheral apparatuses associated with the manufacturing apparatus RB3 serving as an occurrence source of the aforementioned failure. As a result of this determination, in the case where there remains a peripheral apparatus whose log data has not been transmitted, the log data transmission source selection unit 13 increments the degree of relevance W by 1 (+ 1) in step S32, thereby setting the degree of relevance W2 lower than the aforementioned W1.

After setting the degree of relevance W2, the log data transmission source selection unit 13 returns to step S22 in FIG. 6. Then, the log data transmission source selection unit 13 selects the manufacturing apparatus RB1 assigned the degree of relevance W2 from among the peripheral apparatuses RB1, RB2, and RB4 selected in step S20 mentioned above. That is, the log data transmission source selection unit 13 selects the manufacturing apparatus RB1 in which the degree of relevance W in operation with respect to the target apparatus RB3 is smaller than a first threshold and is equal to or greater than a second threshold.

After notification of that the result that the manufacturing apparatus RB1 has been selected is sent, in step S23, the log data transmission control unit 14 sets a log data transmission object period for the selected peripheral apparatus RB1. Subsequently, in step S24, the log data transmission control unit 14 selectively reads, from the operation history storage unit 31, log data which corresponds to the set log data transmission object period, among the log data relating to the peripheral apparatus RB1 . In step S25, the log data transmission control unit 14 transmits the read log data from the communication I/F 5 to the external support center SC. Finally, the log data transmission control unit 14 adds log data transmission history of the peripheral apparatus RB1 to the log data transmission history storage unit 34.

The subsequent processing is the same as the processing in the case of transmitting log data of the peripheral apparatuses RB2 and RB4 having the degree of relevance W1 in that after the log data transmission, information indicating a failure analysis result is received from the external support center SC under the control of the log data transmission source selection unit 13 and the received information is stored in the failure occurrence history storage unit 32.

### (2-4) Erasure of Transmitted Log Data

It is assumed that failure analysis result information including information indicating that a failure occurrence cause has been elucidated is returned from the external support center SC or that transmission of log data corresponding to all peripheral apparatuses defined in the degree-of-relevance information storage unit 33 is completed. In this case, in step S33, the log data transmission control unit 14 designates a set of transmitted log data and then transmits an erasure request for the designated set to the external support center SC.

Upon receipt of the erasure request of log data, the external support center SC batch-erases the log data stored for the analysis processing. After completion of the erasure, the external support center SC returns an erasure completion notification to the production management apparatus CT.

Under control of the log data transmission control unit 14, the control unit 1 of the production management apparatus CT monitors the return of the erasure completion notification in step S34. When the erasure completion notification is returned, in step S35, the erasure completion notification is additionally stored in a log data transmission history corresponding to a corresponding event number in the log data transmission history storage unit 34.

### (Action and Effect)

As described above, in one embodiment, the degree-of-relevance information defining the degrees of relevance in operation between the manufacturing apparatuses RB1, RB2, ..., arranged in the production line LN is stored in the degree-of-relevance information storage unit 33 in the production management apparatus CT. In the case of detecting a failure (including signs of failure) in any one of the manufacturing apparatuses RB1, RB2, ..., a peripheral manufacturing apparatus having an operational relevance to the manufacturing apparatus in which the failure has occurred is selected based on the degree-of-relevance information, and log data generated from the selected peripheral apparatus is transmitted to the external support center SC together with log data of the apparatus in which the failure has occurred.

Therefore, log data to be transmitted is limited to only log data of an apparatus in which a failure has occurred and a peripheral manufacturing apparatus having an operational relevance to the aforementioned apparatus, so that the confidentiality of the log data can be maintained at a high level.

Furthermore, when selecting a peripheral apparatus which serves as a transmission source of log data, peripheral apparatuses are selected based on a failure analysis result from the external support center SC, in a stepwise manner in descending order of the degree of relevance W in operation with an apparatus in which a failure has occurred. This can minimize the range of log data to be transmitted, thereby enabling further improvement in confidentiality of the log data, as compared to a case in which log data corresponding to all the peripheral apparatuses that are possibly involved in the occurrence of a failure are batch-transmitted.

Furthermore, in the transmission of log data, a log data transmission object period is set for each peripheral apparatus in consideration of a distance between a target apparatus and each peripheral apparatus and a work time of one cycle for each peripheral apparatus, while a failure occurrence timing in the target apparatus is used as the reference. This limits a time range of log data to be transmitted, thereby enabling further improvement in confidentiality of the log data.

Furthermore, for example, after completion of the failure analysis processing, the log data transmission control unit 14 transmits a log data erasure request to the external support center SC that has served as a transmission destination of log data to cause the external support center SC to erase the log data, and receives and manages an erasure completion notification in the log data transmission history storage unit 34. This makes it possible to prevent such a problem wherein transmitted log data is used for a purposes other than failure analysis in the external support center SC or are transferred to a third party.

### (Other Embodiments)

In the example described as an example in the above embodiment, distribution control of log data is performed in the production management apparatus CT provided in the production facility MK. However, a similar data distribution control function may be provided in, for example, the external support center SC, etc. This configuration enables control in which a transfer destination of log data is further limited even in the case where the external support center SC transfers log data received from the production management apparatus CT to, for example, a component manufacturer or a software vendor.

Furthermore, the present invention is applicable to, in addition to a production facility, various other facilities such as a power generation facility, a power transmission and distribution facility, a physical distribution facility, and various inspection facilities. In addition, the present invention can be carried out by making various modification without departing from the gist of the present invention to a configuration of log data, functions provided in the data distribution control apparatus, a processing procedure and the processing contents of data distribution control, etc., for example, by making a modification that levels of the degree of association may be set to three levels or more without being limited to two levels.

While the embodiment of the present invention has been described in detail, the foregoing description is merely illustrative of the present invention in all respects. As a matter of course, various modifications and variations can be made without departing from the gist of the invention. That is, in carrying out the present invention, a specific configuration according to the embodiment may be appropriately adopted.

In short, the present invention is not limited to the above embodiment as it is, and can be embodied by modifying structural elements in the implementation stage without departing from the gist of the invention. In addition, various inventions may be constituted by appropriately combining a plurality of components disclosed in the above embodiment. For example, some components may be omitted from all the components shown in the embodiment. Furthermore, structural elements over different embodiments may be appropriately combined.

REFERENCE SIGNS LIST
- MK: Production facility
- CT: Production management apparatus
- LN: Production line
- RB1, RB2,: Manufacturing apparatus
- NW1: LAN
- NW2: WAN
- SC: Outside support center
- 1: Control unit
- 2: Program storage unit
- 3: Data storage unit
- 4, 5: Communication I/F
- 6: Input output unit I/F
- 7: Input unit
- 8: Display unit
- 9: Bus
- 11: Operation history management unit
- 12: Failure occurrence management unit
- 13: Log data transmission source selection unit
- 14: Log data transmission control unit
- 31: Operation history storage unit
- 32: Failure occurrence history storage unit
- 33: Degree-of-relevance information storage unit
- 34: Log data transmission history storage unit

## Claims

1. A data distribution control apparatus configured to transmit log data indicating an operation state of a facility including a plurality of apparatuses to a data user via a network, the data distribution control apparatus comprising:
a first storage medium configured to store degree-of-relevance information indicating a degree of relevance in operation between the plurality of apparatuses included in the facility;
an acquisition unit configured to acquire log data indicating operation states of the plurality of apparatuses and chronologically store the log data in a second storage medium;
a selection unit configured to, at an occurrence of a failure in a first apparatus included in the plurality of apparatuses, select a second apparatus having a degree of relevance in operation to the first apparatus equal to or greater than a preset first threshold from the plurality of apparatuses, based on the degree-of-relevance information; and
a transmission control unit configured to read, as a distribution object, the log data indicating an operation state of the selected second apparatus from the second storage medium and transmit the read log data to the data user via the network.

2. The data distribution control apparatus according to claim 1, wherein in a case where the facility includes a production line and the plurality of apparatuses are arranged along the production line,
the selection unit is configured to select, at an occurrence of a failure in the first apparatus included in the plurality of apparatuses, an apparatus, as the second apparatus, having a degree of relevance in operation to the first apparatus equal to or greater than a preset first threshold, and being located on an upstream side of the first apparatus in the production line, based on the degree-of-relevance information.

3. The data distribution control apparatus according to claim 1, wherein in a case where the facility includes a production line and the plurality of apparatuses are arranged along the production line,
the selection unit is configured to select, at an occurrence of a failure in the first apparatus included in the plurality of apparatuses, an apparatus as the second apparatus based on the degree-of-relevance information, the apparatus having a degree of relevance in operation to the first apparatus equal to or greater than a preset first threshold, the apparatus being located on a downstream side of the first apparatus in the production line.

4. The data distribution control apparatus according to claim 1, further comprising an acquisition unit configured to acquire information indicating an analysis result of the failure from the data user who is a transmission destination of the log data, wherein, in a case where the acquired information indicating the analysis result includes information indicating that analysis is impossible, the selection unit is configured to select a third apparatus having a degree of relevance in operation to the first apparatus smaller than the first threshold and equal to or greater than a second threshold from the plurality of apparatuses, based on the degree-of-relevance information, and
the transmission control unit is configured to selectively read, from the second storage medium, the log data relating to operation states of the first apparatus in which the failure has occurred and the selected third apparatus, and to transmit the read log data to the data user via the network.

5. The data distribution control apparatus according to any one of claims 1 to 4, wherein the transmission control unit is configured to selectively read, from the second storage medium, log data included in a preset time range based on an occurrence timing of the failure from among the log data relating to operation states of the first apparatus and the second or a third apparatus, and to transmit the read log data to the data user.

6. The data distribution control apparatus according to any one of claims 1 to 5, wherein the transmission control unit is configured to further perform processing of erasing the log data stored by the data user after a preset time has elapsed since the log data is transmitted to the data user.

7. A data distribution control method that is executed by a control apparatus configured to control an operation of transmitting log data relating to an operation state of a facility including a plurality of apparatuses to a data user via a network, the data distribution control method comprising:
chronologically storing log data relating to operation states of the plurality of apparatuses in a first storage medium;
storing degree-of-relevance information indicating a degree of relevance in operation between the plurality of apparatuses included in the facility;
at an occurrence of a failure in a first apparatus included in the plurality of apparatuses, selecting a second apparatus having a degree of relevance in operation to the first apparatus equal to or greater than a preset first threshold from the plurality of apparatuses, based on the degree-of-relevance information; and
selectively reading, from the second storage medium, the log data relating to operation states of the first apparatus in which the failure has occurred and the selected second apparatus, and transmitting the read log data to the data user via the network.

8. A program for causing a hardware processor included in the data distribution control apparatus according to any one of claims 1 to 6 to execute processing of each of the units included in the data distribution control apparatus.
